# EUROPÄISCHE PATENTSCHRIFT

(11) **EP 3 659 744 B1**
(45) Veröffentlichungstag und Bekanntmachung des Hinweises auf die Patenterteilung: **18.11.2020**
(21) Anmeldenummer: 18208497.0
(22) Anmeldetag: 27.11.2018
(51) Int. Cl.: B23Q 1/66

(54) **WERKZEUGMASCHINE MIT SCHRÄG GESTELLTEM WERKSTÜCKTISCH**
MACHINE TOOL WITH INCLINED WORKPIECE TABLE
MACHINE-OUTIL POURVU DE TABLE DE TRAVAIL INCLINÉE

(43) Veröffentlichungstag der Anmeldung: 03.06.2020
(73) Patentinhaber: Schwäbische Werkzeugmaschinen GmbH, 78713 Schramberg-Waldmössingen (DE)
(72) Erfinder: Armleder, Wolfgang, 78628 Rottweil (DE)
(74) Vertreter: Kohler Schmid Möbus Patentanwälte

(56) Entgegenhaltungen:
- EP-A1- 1 484 131
- WO-A1-94/26464
- DE-B3-102006 052 933
- DE-T2- 69 410 923

## Beschreibung

Die Erfindung betrifft eine Werkzeugmaschine zur insbesondere spanenden Bearbeitung von Werkstücken mit einem in einem Maschinengestell um eine horizontale Drehachse drehbar gelagerten Werkstücktisch, der auf seinen beiden einander gegenüberliegenden Tischseiten jeweils einen Werkstückträger zur Aufnahme von mindestens einem Werkstück aufweist, wobei der eine Werkstückträger auf einer Bearbeitungsseite und der andere Werkstückträger auf einer Beladeseite vorgesehen sind und wobei der bearbeitungsseitige Werkstückträger und der beladeseitige Werkstückträger durch Verschwenken des Werkstücktisches vertauschbar sind.

Eine derartige Werkzeugmaschine ist beispielsweise durch die DE 10 2006 052 933 B3 bekannt geworden. Der Werkstücktisch dieser Werkzeugmaschine ist um eine horizontale Achse drehbar, so dass die am Werkstücktisch aufgenommenen Werkstücke aus einer Beladesposition in eine Bearbeitungsposition schwenkbar sind. Das Bestücken kann hauptzeitparallel, also während der Bearbeitung der Werkstücke erfolgen.

Es ist demgegenüber die Aufgabe der Erfindung, bei einer Werkzeugmaschine den Bearbeitungs- und/oder den Beladevorgang weiter zu verbessern oder zu vereinfachen.

Diese Aufgabe wird bei einer Werkzeugmaschine der eingangs genannten Art erfindungsgemäß dadurch gelöst, dass die beiden Werkstückträger jeweils eine vorstehende Auflagekante zum Aufstellen von insbesondere plattenförmigen Werkstücken aufweisen und dass der Werkstücktisch in seiner Bearbeitungs- und Beladeposition gegenüber der Senkrechten geneigt ist, so dass sich das auf der Beladeseite an der Auflagekante aufgestellte Werkstück gegen den beladeseitige Werkstückträger bzw. die beladeseitige Tischseite anlehnen kann. Vorzugsweise ist der Werkstücktisch in seiner Bearbeitungs- und Beladeposition um 5° bis 30°, insbesondere um 10° bis 20°, gegenüber der Senkrechten geneigt.

Erfindungsgemäß ermöglichen es die Auflagekanten am Werkstücktisch, dort Werkstücke, insbesondere plattenförmige Werkstücke, anzustellen. Durch die Neigung des Werkstücktisches ist eine ergonomische Bestückung möglich, da die Tischseite eine für den Bestücker angenehme Neigung aufweist und zugleich das Werkstück nicht abrutschen kann. Zugleich weist die bearbeitungsseitige Tischseite eine aus der Senkrechten nach unten geneigte Fläche auf, so dass Kühlflüssigkeiten leicht abfließen und Spänen leicht abgeführt werden können. Dadurch kann der Bearbeitungsprozess effizienter und einfacher gestaltet werden.

In einer besonders bevorzugten Ausführungsform der Erfindung weist der Werkstücktisch an seinen bezüglich der Drehachse äußeren Rändern jeweils eine Dichtung auf, die zumindest in der Bearbeitungs- und Beladeposition des Werkstücktisches dichtend am Maschinengestell anliegt. Die Dichtung kann berührend, beispielsweise mittels eines Abstreifers, oder nicht-berührend, beispielsweise mittels eines Labyrinths, ausgeführt sein. Alternativ oder zusätzlich kann das Maschinengestell Dichtungen aufweisen, die zumindest in der Bearbeitungs- und Beladeposition dichtend an den bezüglich der Drehachse äußeren Rändern des Werkstücktisches anliegen. Auch diese Dichtungen können berührend oder nicht-berührend ausgeführt sein. Durch die Abdichtung der Bearbeitungsseite von der Beladeseite ist hauptzeitparalleles Beladen möglich, da die Bearbeitungsseite gegenüber der Beladeseite abgedichtet ist und damit keine Späne oder ähnliches auf die Beladeseite gelangen können. Zugleich kann die Beladeseite geöffnet werden und den Zugang zum beladeseitigen Werkstückträger ermöglichen, um bearbeitete Werkstücke zu entnehmen und zu bearbeitende Werkstücke zu beladen. Das Entnehmen und Beladen können beispielsweise durch Personen, aber auch von Robotern erfolgen. Hautpzeitparalleles Beladen führt zu verkürzten Bearbeitungszeiten und damit zu Kostenersparnis.

Besonders vorteilhaft dichten die Dichtungen in einem Drehbereich des Werkstücktisches von 0° bis 30°, bevorzugt von 10° bis 20°, gegenüber der Senkrechten die Bearbeitungsseite ab. In der bevorzugten Bearbeitungs- und Beladeposition ist der Werkstücktisch geneigt.

In einer bevorzugten Ausführungsform der Erfindung ist der bearbeitungsseitige Werkstückträger in einem Bearbeitungsraum und der beladeseitige Werkstückträger in einem Beladeraum angeordnet, die dann in der Bearbeitungs- und Beladeposition des Werkstücktisches durch die Dichtungen voneinander getrennt und abgedichtet sind. Der Beladeraum ist durch eine Beladetür für das Beladen zugänglich. Bei geschlossener Beladetür kann dann das Verschwenken des Werkstücktisches durchgeführt werden, so dass beim Verschwenken keine Partikel nach außerhalb der Werkzeugmaschine gelangen können.

Auf der Bearbeitungsseite weist die Werkzeugmaschine in einer Ausführungsform einen Bearbeitungskopf auf, der geneigt eingestellt werden kann. Durch die Neigung des Bearbeitungskopfes kann erreicht werden, dass der Bearbeitungskopf rechtwinklig zum bearbeitungsseiten Werkstückträger gestellt werden kann. Bevorzugt ist der Bearbeitungskopf als Werkzeugspindel ausgeführt, deren Spindelachse rechtwinklig zur Bearbeitunsseite des Werkstücktisches eingestellt wird. Eine Bearbeitung des bearbeitungsseitig eingespannten Werkstückes kann dann intepoliert erfolgen, indem die Werkzeugspindel in x- und y-Richtung verfahren wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:

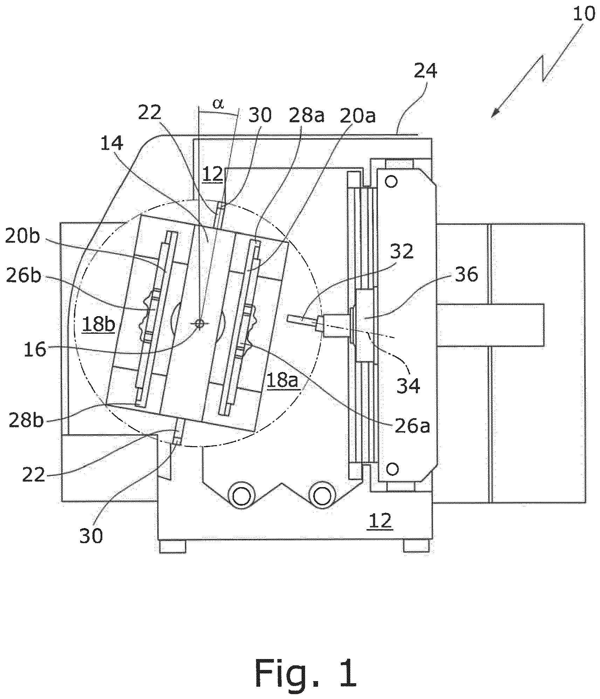

- Fig. 1: schematisch eine erfindungsgemäße Werkzeugmaschine mit einem schwenkbaren Werkstückträger in einer Seitenansicht.

Bei der in **Fig. 1** insgesamt mit **10** bezeichneten Werkzeugmaschine zur spanenden Bearbeitung von Werkstücken **26a, 26b** ist im rahmenartigen Maschinengestell **12** um eine horizontale Drehachse **16** ein Werkstücktisch **14** schwenkbar gelagert. Der Werkstücktisch 14 weist zwei einander gegenüberliegende Tischseiten mit jeweils einem Werkstückträger **20a, 20b** zur Aufnahme von Werkstücken 26a, 26b auf. Der eine Werkstückträger 20a (in Fig. 1 der rechte) ist auf der Bearbeitungsseite **18a** innerhalb eines Bearbeitungsraums und der andere Werkstückträger 20b (in Fig. 1 der linke) auf der Belade- oder Bestückungsseite **18b** innerhalb eines Beladeraums vorgesehen. Durch pendelndes Verschwenken des Werkstücktisches 14 um die Drehachse 16 um 180° lassen sich der bearbeitungsseitige Werkstückträger 20a und der beladeseitige Werkstückträger 20b vertauschen. Der Bearbeitungsraum ist entweder ein in sich geschlossener Maschinenraum oder bildet gemeinsam mit dem Beladeraum einen in sich geschlossenen Maschinenraum.

In der dargestellten Schwenkendposition befindet sich der Werkstücktisch 14 in Bearbeitungs- und Beladeposition, in der der Bearbeitungsraum durch Dichtungen **30** gegenüber dem Beladeraum abgedichtet ist, um so einen abgeschlossenen Bearbeitungsraum auszubilden. Der Beladeraum kann über eine höhenverfahrbare, frontseitige Beladetür **24** nach außen geschlossen werden. Die Dichtungen 30 sind bezogen auf die Drehachse 16 an den äußeren Rändern **22** des Werkstücktisches 14 angebracht. In der dargestellten Ausführungsform ist der Werkstücktisch 14 an den Rändern 22 schmaler als in der Mitte. An den äußeren Enden der Ränder 22 sind die Dichtungen 30 angebracht, die in der Bearbeitungs- und Beladeposition dichtend am Maschinengestell 12 anliegen und so den Bearbeitungsraum abdichten.

Im dargestellten Ausführungsbeispiel ist der Werkstücktisch 14 in der Bearbeitungs- und Beladeposition um den Winkel **α** gegenüber der Senkrechten geneigt. Auf einer vorstehenden Auflagekante **28b** des beladeseitigen Werkstückträger 20b kann das plattenförmige Werkstück 26b aufstellt und gegen die beladeseitige Tischseite angelehnt werden, wodurch das Werkstück 26b bereits während des Beladevorgangs gegen Abrutschen geschützt ist. Dies ermöglicht ein ergonomisches Arbeiten für die Person, die die Bestückung bzw. Beladung durchführt. Falls ein Roboter die Beladung durchführt, kann der Werkstücktisch 14 in der Bearbeitungs- und Beladeposition auch vertikal ausgerichtet sein. Wie gezeigt, ist der Werkstücktisch 14 gegenüber dem Maschinengestell 12 nicht nur unter dem Winkel a, sondern in einem Winkelbereich von 0° bis α abgedichtet.

Am Maschinengestell 12 ist ein Bearbeitungskopf **32** mittels eines Schlittens **36** in drei Richtungen beweglich geführt. Auf der Bearbeitungsseite ist mittels des Bearbeitungskopfes 32 eine Bearbeitung des bearbeitungsseitigen Werkstückes 26a möglich, während gleichzeitig (hauptzeitparallel) auf der Beladeseite die Beladung mit neuen Werkstücken durchgeführt wird. Der Bearbeitungskopf 32 ist beispielsweise eine Werkzeugspindel, die um den Winkel α um die Spindelachse 34 geneigt werden kann, um rechtwinklig zun bearbeitungsseitigen Werkstückträger 20a ausgerichtet zu werden. Die Bearbeitung kann dann interpolierend durch Bewegen der Schlittens 36 erfolgen. Die Steuerung der Werkzeugmaschine 10 berechnet unter Berücksichtung der Neigung des Werkstücktisches 14 die von der Werkzeugspindel anzufahrenden Positionen zur Bearbeitung.

Die Funktionsweise der Werkzeugmaschine 1 wird nachfolgend beschrieben.

Der um den Winkel α (ca. 10° bis 20°) geneigt ausgerichtete beladeseitige Werkstückträger 20b wird bei geöffneter Beladetür 24 mit neuen Werkstücken 26b auf der Beladeseite 18b bestückt. Der bearbeitungsseitige Werkstückträger 20a ist ebenfalls um den Winkel α geneigt, und die daran gehaltenen Werkstücke 26a werden mittels eines im Bearbeitungskopf 32 aufgenommenen Werkzeuges auf der Bearbeitungsseite 18a bearbeitet. Der Bearbeitungskopf 32 ist dabei ebenfalls um den Winkel α um die Spindelachse 34 geneigt, damit das Werkzeug rechtwinklig zum bearbeitungsseitigen Werkstückträger 20a bzw. zur bearbeitungsseitigen Tischseite ausgerichtet ist.

Wenn die Werkstücke 26a fertig bearbeitet sind, werden durch Drehen des Werkstücktisches 14 um die Drehachse 16 um 180° der bearbeitungsseitige Werkstückträger 20a und der beladeseitige Werkstückträger 20b vertauscht. Die nun bearbeitungsseitigen neuen Werkstücke 26a werden mittels des Werkzeugs des Bearbeitungskopfes 32 bearbeitet. Gleichzeitig werden die fertig bearbeiteten Werkstücke 26b von dem nun beladeseitigen Werkstückträger 20b entladen, und der beladeseitige Werkstückträger 20b wird wieder mit neuen Werkstücken 13 bestückt.

## Patentansprüche

1. Werkzeugmaschine (10) zur insbesondere spanenden Bearbeitung von Werkstücken (26a, 26b) mit einem in einem Maschinengestell (12) um eine horizontale Drehachse (16) drehbar gelagerten Werkstücktisch (14), der auf seinen beiden einander gegenüberliegenden Tischseiten jeweils einen Werkstückträger (20a, 20b) zur Aufnahme von mindestens einem Werkstück (26a, 26b) aufweist, wobei der eine Werkstückträger (20a) auf einer Bearbeitungsseite (18a) und der andere Werkstückträger (20b) auf einer Beladeseite (18b) vorgesehen sind und wobei der bearbeitungsseitige Werkstückträger (20a) und der beladeseitige Werkstückträger (20b) durch Verschwenken des Werkstücktisches (14) vertauschbar sind,
**dadurch gekennzeichnet,**
**dass** die beiden Werkstückträger (20a, 20b) jeweils eine vorstehende Auflagekante (28a, 28b) zum Aufstellen von insbesondere plattenförmigen Werkstücken (26a, 26b) aufweisen und dass der Werkstücktisch (14) in seiner Bearbeitungs- und Beladeposition gegenüber der Senkrechten geneigt ist, so dass sich das auf der Beladeseite (18b) an der Auflagekante (28b) aufgestellte Werkstück (26b) gegen die beladeseitige Tischseite anlehnen kann.

2. Werkzeugmaschine nach Anspruch 1, **dadurch gekennzeichnet, dass** der Werkstücktisch (14) in seiner Bearbeitungs- und Beladeposition um 5° bis 30°, bevorzugt um 10° bis 20°, gegenüber der Senkrechten geneigt ist.

3. Werkzeugmaschine nach Anspruch 1 oder 2, **dadurch gekennzeichnet, dass** der Werkstücktisch (14) an seinen beiden bezüglich der Drehachse (16) äußeren Rändern jeweils eine Dichtung (30) aufweist, die zumindest in der Bearbeitungs- und Beladeposition des Werkstücktisches (14) dichtend am Maschinengestell (12) anliegt.

4. Werkzeugmaschine nach einem der vorhergehenden Ansprüche, **dadurch gekennzeichnet, dass** das Maschinengestell (12) Dichtungen aufweist, die zumindest in der Bearbeitungs- und Beladeposition dichtend an beiden bezüglich der Drehachse (16) äußeren Rändern des Werkstücktischs (14) anliegen.

5. Werkzeugmaschine Anspruch 3 oder 4, **dadurch gekennzeichnet, dass** die Dichtungen (30) in einem Drehbereich des Werkstücktisches (14) von 0° bis 30°, bevorzugt von 10° bis 20°, gegenüber der Senkrechten die Bearbeitungsseite (18a) abdichten.

6. Werkzeugmaschine nach einem der vorhergehenden Ansprüche, **dadurch gekennzeichnet, dass** der bearbeitungsseitige Werkstückträger (20a) innerhalb eines Bearbeitungsraumes und der beladeseitige Werkstückträger (20b) innerhalb eines Beladeraumes angeordnet ist.

7. Werkzeugmaschine nach einem der vorhergehenden Ansprüche, **gekennzeichnet durch** einen Bearbeitungskopf (32), der mit seiner Spindelachse (34) in der Bearbeitungs- und Beladeposition rechtwinklig zum bearbeitungsseitigen Werkstückträger (20a) bzw. zur bearbeitungsseitigen Tischseite (18a) einstellbar ist.

## Claims

1. Machine tool (10) for, in particular, machining processing of workpieces (26a, 26b) comprising a workpiece table (14) which is mounted in a machine frame (12) such that it can be rotated about a horizontal axis of rotation (16) and comprises one workpiece holder (20a, 20b) on each of its two opposite table sides for receiving at least one workpiece (26a, 26b), wherein one workpiece holder (20a) is provided on a processing side (18a) and the other workpiece holder (20b) is provided on a loading side (18b) and wherein the workpiece holder (20a) on the processing side and the workpiece holder (20b) on the loading side can be exchanged by swivelling the workpiece table (14), **characterized in that**
the two workpiece holders (20a, 20b) each have a projecting support edge (28a, 28b) for putting, in particular, plate-shaped workpieces (26a, 26b) and that in its processing position and loading position the workpiece table (14) is inclined with respect to the vertical such that the workpiece (26b) put on the support edge (28b) on the loading side (18b) can rest against the table side on the loading side.

2. Machine tool according to claim 1, **characterized in that** the workpiece table (14) is inclined by 5° to 30°, preferably by 10° to 20°, with respect to the vertical in its processing position and loading position.

3. Machine tool according to claim 1 or 2, **characterized in that** the workpiece table (14) comprises one seal (30) on each of its two outer edges relative to the axis of rotation (16), the seal sealingly abutting the machine frame (12) at least in the processing position and loading position of the workpiece table (14).

4. Machine tool according to any one of the preceding claims, **characterized in that** the machine frame (12) comprises seals, which sealingly abut the two outer edges of the workpiece table (14) relative to the axis of rotation (16) at least in the processing position and loading position.

5. Machine tool according to claim 3 or 4, **characterized in that** the seals (30) seal the processing side (18a) in a rotation range of the workpiece table (14) of between 0° and 30°, preferably between 10° and 20°, with respect to the vertical.

6. Machine tool according to any one of the preceding claims, **characterized in that** the workpiece holder (20a) on the processing side is arranged within a processing space and the workpiece holder (20b) on the loading side is arranged within a loading space.

7. Machine tool according to any one of the preceding claims, **characterized by** a processing head (32), the spindle axis (34) of which can be adjusted in the processing position and loading position perpendicularly to the workpiece holder (20a) on the processing side or to the table side (18a) on the processing side.

## Revendications

1. Machine-outil (10) dévolue à l'usinage de pièces (26a, 26b), notamment par enlèvement de copeaux, équipée d'un plateau porte-pièces (14) monté rotatif autour d'un axe horizontal de rotation (16) dans un bâti (12) de la machine et muni, sur ses deux faces tournées à l'opposé, d'un support de pièces (20a, 20b) respectif conçu pour recevoir au moins une pièce (26a, 26b), l'un (20a) des supports de pièces étant prévu sur un côté usinage (18a), et l'autre support de pièces (20b) étant prévu sur un côté chargement (18b), sachant que ledit support de pièces (20a) situé côté usinage et ledit support de pièces (20b) situé côté chargement peuvent être permutés par pivotement imprimé au plateau porte-pièces (14),
**caractérisée par le fait**
**que** les deux supports de pièces (20a, 20b) sont respectivement pourvus d'une arête de soutien (28a, 28b) en saillie, affectée à la mise en place de pièces (26a, 26b) notamment en forme de plaques ; et par le fait que le plateau porte-pièces (14) est incliné par rapport à la verticale en ses emplacements d'usinage et de chargement, de façon telle que la pièce (26b), dressée contre l'arête de soutien (28b) sur le côté chargement (18b), puisse prendre appui contre la face du plateau située côté chargement.

2. Machine-outil selon la revendication 1, **caractérisée par le fait que** le plateau porte-pièces (14) est incliné, en ses emplacements d'usinage et de chargement, de 5° à 30° et préférentiellement de 10° à 20° par rapport à la verticale.

3. Machine-outil selon la revendication 1 ou 2, **caractérisée par le fait que** le plateau porte-pièces (14) est doté à chaque fois, sur ses deux bords situés à l'extérieur par rapport à l'axe de rotation (16), d'une garniture d'étanchement (30) en applique de manière étanche, sur le bâti (12) de la machine, au moins aux emplacements d'usinage et de chargement dudit plateau porte-pièces (14).

4. Machine-outil selon l'une des revendications précédentes, **caractérisée par le fait que** le bâti (12) de ladite machine est muni de garnitures d'étanchement en applique de manière étanche, au moins aux emplacements d'usinage et de chargement, sur les deux bords du plateau porte-pièces (14) qui sont situés à l'extérieur par rapport à l'axe de rotation (16).

5. Machine-outil selon la revendication 3 ou 4, **caractérisée par le fait que** les garnitures d'étanchement (30) assurent l'étanchéité du côté usinage (18a) dans une plage de rotation du plateau porte-pièces (14) de 0° à 30°, préférentiellement de 10° à 20° par rapport à la verticale.

6. Machine-outil selon l'une des revendications précédentes, **caractérisée par le fait que** le support de pièces (20a) situé côté usinage et le support de pièces (20b) situé côté chargement sont disposés, respectivement, à l'intérieur d'un espace d'usinage et à l'intérieur d'un espace de chargement.

7. Machine-outil selon l'une des revendications précédentes, **caractérisée par** une tête d'usinage (32) pouvant être respectivement réglée par l'axe (34) de sa broche, aux emplacements d'usinage et de chargement, à angle droit par rapport au support de pièces (20a) situé côté usinage, ou au côté (18a) du plateau situé côté usinage.
